# EUROPÄISCHE PATENTSCHRIFT

(11) **EP 2 670 783 B1**
(45) Veröffentlichungstag und Bekanntmachung des Hinweises auf die Patenterteilung: **07.01.2015**
(21) Anmeldenummer: 12708775.7
(22) Anmeldetag: 31.01.2012
(51) Int. Cl.: C08F 220/06, C08F 2/38

(54) **NIEDERMOLEKULARE PHOSPHORHALTIGE POLYACRYLSÄUREN UND DEREN VERWENDUNG ALS DISPERGIERMITTEL**
LOW MOLECULAR MASS, PHOSPHORUS-CONTAINING POLYACRYLIC ACIDS AND USE THEREOF AS DISPERSANTS
ACIDES POLYACRYLIQUES PHOSPHORÉS À FAIBLE POIDS MOLÉCULAIRE ET LEUR UTILISATION COMME AGENTS DISPERSANTS

(30) Priorität: 04.02.2011 EP 11153389
(43) Veröffentlichungstag der Anmeldung: 11.12.2013
(73) Patentinhaber: BASF SE, 67056 Ludwigshafen (DE)
(72) Erfinder: DUNGWORTH, Howard Roger, West Yorkshire HD6 3EH (GB); PETTY, David, West Yorkshire BD15 8AE (GB); URTEL, Bolette, 67240 Bobenheim-Roxheim (DE); WIRSCHEM, Ruth, 68159 Mannheim (DE)
(86) Internationale Anmeldenummer: PCT/EP2012/051562
(87) Internationale Veröffentlichungsnummer: WO 2012/104304

(56) Entgegenhaltungen:
- EP-A2- 0 405 818
- EP-A2- 0 969 024

## Beschreibung

Die Erfindung betrifft niedermolekulare phosphorhaltige Polyacrylsäuren, diese enthaltende wässrige Lösungen, Verfahren zu deren Herstellung sowie deren Verwendung als Dispergiermittel.

Dispergiermittel, insbesondere Polyacrylsäuren, finden eine breite Anwendung in technischen Prozessen, bei denen ein Feststoff in eine pumpfähige Dispersion überführt wird. Um eine breite industrielle Anwendung zu gewährleisten, müssen diese Dispersionen, auch Slurries genannt, sowohl eine gute Pumpfähigkeit als auch Lagerbeständigkeit (geringe Alterung) bei gleichzeitig hohem Feststoffgehalt aufweisen. Letzteren gilt es möglichst zu steigern aufgrund der hohen Energie- und Transportkosten. Ein typisches Beispiel ist die Verwendung von wässrigen Calciumcarbonat-Slurries bei der Herstellung von graphischen Papieren. Während gute Fließeigenschaften der Slurries im wesentlichem die Prozessfähigkeit bei der Papierherstellung bzw. des Papier-Coatings sicherstellen, bedingt die Feinheit des dispergierten Feststoffs die optischen Eigenschaften des daraus hergestellten Papiers, wie beispielsweise die Opazität. Eine geringere Partikelgröße bei gleichem Feststoffgehalt der Slurry ergibt eine höhere Opazität des daraus hergestellten Papiers. Die Partikelgröße wird dabei nicht nur durch den Eintrag von mechanischer Energie während der Naßvermahlung des Pigments, sondern auch durch die Wahl des eingesetzten Dispergiermittels entscheidend beeinflusst.

Es ist bekannt, dass mittels radikalischer Polymerisation hergestellte niedermolekulare Polyacrylsäuren gute dispergierende Eigenschaften aufweisen. Für eine gute Wirkung sollte das Molekulargewichtsmittel (Mw) dieser Polymere < 50 000 sein. Oft sind Polyacrylsäuren mit Mw < 10 000 besonders effektiv. Um niedermolekulare Polyacrylsäuren herzustellen, werden Molekulargewichtsregler bzw. Kettenüberträger während der radikalischen Polymerisation von Acrylsäure zugesetzt. Diese Regler müssen auf den Polymerisationsinitiator sowie auf den Polymerisationsprozess abgestimmt sein. Bekannte Initiatoren sind beispielsweise anorganische und organische Perverbindungen, wie Peroxodisulfate, Peroxide, Hydroperoxide und Perester, Azoverbindungen wie 2,2'-Azobisisobutyronitril und Redoxsysteme mit anorganischen und organischen Komponenten. Als Regler werden häufig anorganische Schwefelverbindungen wie Hydrogensulfite, Disulfite und Dithionite, organische Sulfide, Sulfoxide, Sulfone und Mercaptoverbindungen wie Mercaptoethanol, Mercaptoessigsäure sowie anorganische Phosphorverbindungen wie Hypophosphorige Säure (Phosphinsäure) und ihre Salze (z.B. Natriumhypophosphit) eingesetzt.

EP-A 405 818 offenbart ein Verfahren zur Herstellung von Polymeren aus monoethylenisch ungesättigten Monocarbonsäuren und optional weiteren Monomeren mit Natriumpersulfat als Starter in Gegenwart von Hypophosphit als Regler, bei dem ein alkalisches Neutralisationsmittel während der Polymerisation in einer Menge, die ausreicht, um mindestens 20 % der sauren Gruppen zu neutralisieren, zugegen ist. Die erhaltenen niedermolekularen Polymere enthalten mindestens 80% des aus dem Hypophosphit stammenden Phosphors. Mindestens 70% des Phosphors sollen sich als Dialkylphosphinat innerhalb der Polymerkette wieder finden. Die so hergestellten Polymere werden u.a. als Waschmitteladditive, Dispergiermittel für Clay-Slurries oder Belagsverhinderer für die Wasserbehandlung eingesetzt.

In den Ausführungsbeispielen wird Acrylsäure in Zulauf-Fahrweise in Gegenwart von Hypophosphit als Regler und Natriumpersulfat als Starter in Wasser polymerisiert, wobei während der Polymerisation Natronlauge als weiterer kontinuierlicher Zulauf zugegeben wird. Es wird eine wässrige Polyacrylsäure mit einem gewichtsmittleren Molekulargewicht M_{w} von 2700 g/mol erhalten, welche 72% des im Natriumphosphit enthaltenen Phosphors als Dialkylphosphinat, 18% als Monoalkylphosphinat und 10% in Form anorganischer Salze enthält. In einem Vergleichsbeispiel wird auf den Natronlaugezulauf verzichtet und erst nach Beendigung der Polymerisation mit Natronlauge neutralisiert. Dabei wird eine wässrige Polyacrylsäure mit einem gewichtsmittleren Molekulargewicht M_{w} von 4320 g/mol erhalten, welche nur 45% des im Natriumphosphit enthaltenen Phosphors als Dialkylphosphinat, 25% als Monoalkylphosphinat und 30% in Form anorganischer Salze enthält.

EP-A 510 831 offenbart ein Verfahren zur Herstellung von Polymeren aus monoethylenisch ungesättigten Monocarbonsäuren, monoethylenisch ungesättigten Dicarbonsäuren und optional weiteren Monomeren, die keine Carboxylgruppe enthalten, in Gegenwart von Hypophosphoriger Säure als Kettenüberträger. Mindestens 40 % des im Polymer eingebauten Phosphors liegen als Monoalkylphosphinat und Monoalkylphosphonat am Ende der Polymerkette vor. Die Copolymere finden u.a. Verwendung als Dispergiermittel, Belagsinhibitor und Waschmitteladditiv.

EP-A 618 240 offenbart ein Verfahren zur Polymerisation von Monomeren in Wasser in Gegenwart eines wasserlöslichen Initiators und hypophosphoriger Säure oder eines ihrer Salze. Das Verfahren wird so durchgeführt, dass am Ende der Polymerisation der Polymergehalt mindestens 50 Gew.-% beträgt. Durch diese Fahrweise gelingt es, die Menge an aus dem Hypophosphit stammenden, im Polymer eingebauten Phosphor zu erhöhen. Dieser liegt in Form von Dialkylphoshinat, Monoalkylphosphinat sowie Monoalkylphosphonat im Polymer vor. Über die Verteilung des Phosphors wird keine Aussage gemacht. Die Copolymere finden u.a. Verwendung als Dispergiermittel, Belagsinhibitoren und Waschmitteladditive.

EP-A 1 074 293 offenbart Phosphonat-terminierte Polyacrylsäure mit einem Molekulargewicht M_{w} von 2000 bis 5800 g/mol als Dispergiermittel zur Herstellung wässriger Slurries von Calciumcarbonat, Kaolin, Ton, Talk und Metalloxiden mit einem Feststoffgehalt von mindestens 60 Gew.-%.

Aufgabe der Erfindung ist es, niedermolekulare Polyacrylsäuren mit verbesserter Dispergierwirkung bereitzustellen.

Gelöst wird die Aufgabe durch ein Verfahren zur Herstellung von wässrigen Lösungen von Acrylsäure-Polymeren durch Polymerisation von Acrylsäure in Zulauf-Fahrweise mit einem Radikalstarter in Gegenwart von Hypophosphit in Wasser als Lösungsmittel, bei dem
(i) Wasser und gegebenenfalls ein oder mehrere ethylenisch ungesättigte Comonomere vorgelegt,
(ii) Acrylsäure in saurer, nicht neutralisierter Form, gegebenenfalls ein oder mehrere ethylenisch ungesättigte Comonomere, wässrige Radikalstarter-Lösung und wässrige Hypophosphit-Lösung kontinuierlich zugegeben werden,
(iii) nach Beendigung des Acrylsäure-Zulaufs zu der wässrigen Lösung eine Base zugegeben wird,
wobei der Comonomer-Gehalt 30 Gew.-%, bezogen auf den Gesamtmonomer-Gehalt, nicht übersteigt, dadurch gekennzeichnet, dass
die wässrige Hypophosphit-Lösung während einer Gesamtzulaufzeit aus drei aufeinander folgenden Zulaufzeitspannen Δt_{I}, Δt_{II} und Δt_{III} zugegeben wird, wobei die mittlere Zulaufgeschwindigkeit in der zweiten Zulaufzeitspanne Δt_{II} größer ist als die mittleren Zulaufgeschwindkeiten in der ersten und in der dritten Zulaufzeitspanne Δt_{I}, Δt_{III}.

Vorzugsweise beträgt die erste Zulaufzeitspanne Δt_{I} 30 bis 70% der Gesamtzulaufzeit.

Weiterhin bevorzugt beträgt die zweite Zulaufzeitspanne Δt_{II} 5 bis 25%, insbesondere 5 bis 15% der Gesamtzulaufzeit.

Weiterhin bevorzugt umfasst die dritte Zulaufzeitspanne zwei Teil-Zulaufzeitspannen Δt_{IIIa} und Δt_{IIIb}, wobei während der ersten Teil-Zulaufzeitspanne Δt_{IIIa} die mittlere Zulaufgeschwindigkeit größer oder gleich groß und während der zweiten Teil-Zulaufzeitspanne Δt_{IIIb} die mittlere Zulaufgeschwindigkeit kleiner als die mittlere Zulaufgeschwindigkeit während der ersten Zulaufzeitspanne Δt_{I} ist.

Die Zulaufgeschwindigkeit ist die Stoffmenge pro Zeiteinheit Δn / Δt.

Im Allgemeinen beträgt die Gesamtzulaufzeit 80 bis 500 min, vorzugsweise 100 bis 400 min.

Die Comonomere können in dem Reaktionsansatz vorgelegt werden, zum Teil vorgelegt und zum Teil als Zulauf zugegegeben oder ausschließlich als Zulauf zugegeben werden. Werden sie teilweise oder insgesamt als Zulauf zugegeben, so werden sie im Allgemeinen gleichzeitig mit der Acrylsäure zugegeben.

Im Allgemeinen wird Wasser vorgelegt und auf die Reaktionstemperatur von mindestens 75°C, bevorzugt 95 bis 105°C erwärmt.

Zusätzlich kann eine wässrige Lösung von Phosphoriger Säure als Korrosionsinhibitor mit vorgelegt werden.

Anschließend werden die kontinuierlichen Zuläufe von Acrylsäure, gegebenenfalls von ethylenisch ungesättigtem Comonomer, Starter und Regler gestartet. Acrylsäure wird in nicht neutralisierter, saurer Form zugegeben. Im Allgemeinen werden die Zuläufe gleichzeitig gestartet. Sowohl Peroxodisulfat als Starter als auch Hypophoshit als Regler werden in Form ihrer wässrigen Lösungen eingesetzt. Hypophosphit kann in Form von Hypophosphoriger Säure (Phosphinsäure) oder in Form von Salzen der Hypophosphorigen Säure eingesetzt werden. Besonders bevorzugt wird Hypophosphit als Hypophosphorige Säure oder als Natriumsalz eingesetzt.

Im Allgemeinen wird Acrylsäure mit konstanter Zulaufgeschwindigkeit zugegeben. Werden Comonomere mit eingesetzt und zumindest teilweise als Zuläufe zugegeben, so ist die Zulaufgeschwindigkeit der Comonomer-Zuläufe im Allgemeinen ebenfalls konstant. Die Zulaufgeschwindigkeit der Radikalstarter-Lösung ist im Allgemeinen ebenfalls konstant.

Bevorzugter Radikalstarter ist Peroxodisulfat. Peroxodisulfat wird im Allgemeinen in Form des Natrium- oder Ammoniumsalzes eingesetzt. Der Gehalt einer bevorzugt verwendeten wässrigen Peroxodisulfat-Lösung beträgt 5 bis 10 Gew.-%. Der Hypophosphit-Gehalt der wässrigen Hypophosphit-Lösung beträgt vorzugsweise 35 bis 70 Gew.-%.

Bevorzugt wird Peroxodisulfat in Mengen von 0,5 bis 10 Gew.-%, bevorzugt 0,8 bis 5 Gew.-%, bezogen auf die Gesamtmenge an Monomeren (Acrylsäure und gegebenenfalls Comonomere), eingesetzt.

Bevorzugt wird Hypophosphit in Mengen von 4 bis 8 Gew.-%, bevorzugt 5 bis 7 Gew.-%, bezogen auf die Gesamtmenge an Monomeren, eingesetzt.

Die Dauer des Starter-Zulaufs kann bis zu 50% länger sein als die Dauer des Acrylsäure-Zulaufs. Vorzugsweise ist die Dauer des Starter-Zulaufs um ca. 3 bis 20% länger als die Dauer des Acrylsäure-Zulaufs. Die Gesamtdauer des Regler-Zulaufs ist bevorzugt gleich der Dauer des Acrylsäure-Zulaufs. Im Allgemeinen ist die Gesamtdauer des Regler-Zulaufs gleichlang oder bis zu 20 % kürzer oder länger als die Dauer des Acrylsäure-Zulaufs.

Die Dauer des Monomer-Zulaufs bzw. - bei Verwendung eines Comonomeren - der Monomer-Zuläufe beträgt beispielsweise 2 bis 5 h. Beispielsweise endet bei gleichzeitigem Start aller Zuläufe der Regler-Zulauf 10 bis 30 min vor dem Ende des Monomer-Zulaufs, und endet der Starter-Zulauf 10 bis 30 min nach dem Ende des Monomer-Zulaufs.

Im Allgemeinen wird nach Beendigung des Acrylsäure-Zulaufs zu der wässrigen Lösung eine Base zugegeben. Dadurch wird das gebildete Acrylsäure-Polymer zumindest teilweise neutralisiert. Teilweise neutralisiert heißt, dass nur ein Teil der in dem Acrylsäure-Polymer enthaltenen Carboxylgruppen in der Salzform vorliegt. Im Allgemeinen wird so viel Base zugegeben, dass der pH-Wert anschließend im Bereich von 3 bis 8,5, vorzugsweise 4 bis 8,5, insbesondere 4,0 bis 5,5 (teilweise neutralisiert) oder 6,5 bis 8,5 (vollständig neutralisiert) liegt. Als Base wird vorzugsweise Natronlauge eingesetzt. Daneben können auch Ammoniak oder Amine, beispielsweise Triethanolamin, eingesetzt werden. Der dabei erzielte Neutralisationsgrad der erhaltenen Polyacrylsäuren liegt zwischen 15 und 100 %, bevorzugt zwischen 30 und 100 %. Die Neutralisation erfolgt im Allgemeinen über einen längeren Zeitraum von beispielsweise ½ bis 3 Stunden, um die Neutralisationswärme gut abführen zu können.

Im Allgemeinen wird die Polymerisation unter Inertgasatmosphäre durchgeführt. Dabei werden Acrylsäure-Polymere erhalten, deren terminal gebundener Phosphor im Wesentlichen (im Allgemeinen zu mindestens 90%) in Form von Phosphinat-Gruppen vorliegt.

In einer weiteren Variante wird nach Beendigung der Polymerisation ein Oxidationsschritt durchgeführt. Durch den Oxidationsschritt werden terminale Phosphinat-Gruppen in terminale Phosphonat-Gruppen überführt. Die Oxidation erfolgt im Allgemeinen durch Behandlung des Acrylsäure-Polymers mit einem Oxidationsmittel, bevorzugt mit wässriger Wasserstoffperoxid-Lösung.

Es werden wässrige Lösungen von Acrylsäure-Polymeren mit einem Feststoffgehalt von im Allgemeinen mindestens 30 Gew.-%, bevorzugt mindestens 35 Gew.-%, besonders bevorzugt 40 bis 70 Gew.-%, insbesondere 40 bis 55 Gew.-% Polymer erhalten.

Die erfindungsgemäß erhältlichen Acrylsäure-Polymeren weisen einen Phosphor-Gesamtgehalt von organisch und gegebenenfalls anorganisch gebundenem Phosphor auf, wobei
(a) ein erster Teil des Phosphors in Form von in der Polymerkette gebundenen Phosphinat-Gruppen vorliegt,
(b) ein zweiter Teil des Phosphors in Form von am Polymerkettenende gebundenen Phosphinat- und/oder Phosphonat-Gruppen vorliegt,
(c) gegebenenfalls ein dritter Teil des Phosphors in Form von gelösten anorganische Phosphorsalzen vorliegt,
und im Allgemeinen mindestens 76% des Phosphor-Gesamtgehalts in Form von in der Polymerkette gebundenen Phosphinat-Gruppen vorliegt.

Bevorzugt liegen mindestens 78%, besonders bevorzugt mindestens 80% des Phosphor-Gesamtgehalts in Form von in der Polymerkette gebundenen Phosphinat-Gruppen vor. Durch die erfindungsgemäße Zulauf-Fahrweise wird ein besonders hoher Gehalt an in der Polymerkette gebundenem Phosphor erhalten.

Im Allgemeinen liegen höchstens 15%, bevorzugt höchstens 12% des Phosphors in Form von am Polymerkettenende gebundenen Phosphinat- und/oder Phosphonat-Gruppen vor. Besonders bevorzugt liegen 4 bis 12% und insbesondere 7 bis 12% des Phosphors in Form von am Polymerkettenende gebundenen Phosphinat- und/oder Phosphonat-Gruppen vor.

Bis zu 15% des in der wässrigen Lösung der Acrylsäure-Polymere enthaltenen Phosphors können in Form von anorganischem Phosphor, insbesondere in Form von Hypophosphit und Phosphit vorliegen. Vorzugsweise liegen 2 bis 12%, besonders bevorzugt 4 bis 11% des Gesamt-Phosphors in Form von anorganisch gebundenem Phosphor vor.

Das Verhältnis von in der Polymerkette gebundenem Phosphor zu am Kettenende gebundenem Phosphor beträgt mindestens 4 : 1. Vorzugsweise beträgt dieses Verhältnis mindestens 5 : 1 bis 10 : 1, insbesondere 6 : 1 bis 9 : 1.

Im Allgemeinen beträgt das gewichtsmittlere Molekulargewicht des Acrylsäure-Polymers 1000 bis 20 000 g/mol, bevorzugt 3500 bis 12 000 g/mol, besonders bevorzugt 3500 bis 8000, insbesondere 3500 bis 6500 g/mol und speziell 4000 bis 6500 g/mol. Das Molekulargewicht kann innerhalb dieser Bereiche gezielt durch die verwendete Regler-Menge eingestellt werden.

Der Anteile von Polymeren mit einem Molekulargewicht von < 1000 g/mol beträgt im Allgemeinen ≤ 10 Gew.-%, bevorzugt < 5 Gew.-%, bezogen auf das gesamte Polymer.

Die Molekulargewichte wurden mittels GPC an auf pH 7 gepufferten wässrigen Lösungen der Polymere unter Verwendung von Hydroxyethylmethacrylat-Copolymer-Netzwerk (HEMA) als stationärer Phase und von Natriumpolyacrylat-Standards ermittelt.

Im Allgemeinen beträgt der Polydispersitätsindex des Acrylsäure-Polymers M_{w} / M, :5 2,5, bevorzugt 1,5 bis 2,5, beispielsweise 2.

Die K-Werte, bestimmt nach der Fikentscher-Methode an einer 1 gew.-%igen Lösung in VE-Wasser, betragen im Allgemeinen von 10 bis 50, bevorzugt von 15 bis 35 und besonders bevorzugt von 20 bis 30.

Das Acrylsäure-Polymer kann bis zu 30 Gew.-%, bevorzugt bis zu 20 Gew.-%, besonders bevorzugt bis zu 10 Gew.-%, bezogen auf alle ethylenisch ungesättigten Monomere, ethylenisch ungesättigte Comonomere mit einpolymerisiert enthalten. Beispiele für geeignete ethylenisch ungesättigte Comonomere sind Methacrylsäure, Maleinsäure, Maleinsäureanhydrid, Vinylsulfonsäure, Allylsulfonsäure und AMPS sowie deren Salze. Auch Mischungen dieser Comonomere können enthalten sein.

Insbesondere bevorzugt sind Acrylsäure-Homopolymere ohne Comonomer-Anteil.

Die erhaltenen wässrigen Lösungen der Acrylsäure-Polymere können direkt als Dispergiermittel eingesetzt werden.

Die Erfindung betrifft auch die Verwendung der wässrigen Lösungen der Acrylsäure-Polymere bzw. der Acrylsäure-Polymere selbst als Dispergierhilfsmittel für anorganische Pigmente und Füllstoffe, wie z.B. CaCO₃, Kaolin, Talkum, TiO₂, ZnO, ZrO₂, Al₂O₃ und MgO.

Die daraus gewonnenen Slurries werden als Weißpigmente für graphische Papiere und Anstrichfarben, als Deflocculants für die Herstellung von keramischen Werkstoffen oder auch als Füllstoffe für Thermoplasten verwendet. Die Acrylsäure-Polymere können aber auch für andere Zwecke verwendet werden, beispielsweise in Waschmitteln, Geschirrreinigern, technischen Reinigern, zur Wasserbehandlung oder als Ölfeldchemikalien. Falls gewünscht können sie vor der Anwendung durch verschiedene Trocknungsverfahren, z.B. Sprühtrocknung, Walzentrocknung oder Schaufeltrocknung, in Pulverform überführt werden.

Besonders bevorzugte Dispersion (Slurry), für die die erfindungsgemäßen Acrylsäure-Polymere verwendet werden, ist gemahlenes Calciumcarbonat. Die Mahlung wird kontinuierlich oder diskontinuierlich in wässriger Suspension durchgeführt. Der Calciumcarbonatgehalt liegt in dieser Suspension in der Regel bei ≥ 50 Gew.-%, bevorzugt bei ≥ 60 Gew.-% und besonders bevorzugt bei ≥ 70 Gew.-%. Üblicherweise werden, jeweils bezogen auf das in der Suspension enthaltene Calciumcarbonat, 0,1 bis 2 Gew.-%, vorzugsweise 0,3 bis 1,5 Gew.-%, der erfindungsgemäß verwendeten Polyacrylsäure eingesetzt. Vorzugsweise haben in diesen Calciumcarbonat-Slurries nach der Mahlung 95 % der Teilchen eine Teilchengröße von kleiner als 2 µm und 75 % der Teilchen eine Teilchengröße von kleiner als 1 µm. Die erhaltenen Calciumcarbonat-Slurries weisen ausgezeichnete rheologische Eigenschaften auf und sind auch nach mehrtägiger Lagerung noch pumpfähig, wie aus den Viskositätsverläufen in Tabelle 2 ersichtlich ist.

Die Erfindung wird durch die nachstehenden Beispiele näher erläutert.

### Beispiele

Alle Molekulargewichte wurden mittels GPC ermittelt. Die für GPC verwendeten Bedingungen sind wie folgt: 2 Säulen (Suprema Linear M) und eine Vorsäule (Suprema Vorsäule), alle der Marke Suprema-Gel (HEMA) von der Firma Polymer Standard Services (Mainz, Deutschland), wurde bei 35°C mit einer Flussrate von 0,8 ml/min betrieben. Als Eluent wurde die mit TRIS bei pH 7 gepufferte wässrige Lösung, die mit 0,15 M NaCl und 0,01 M NaN₃ versetzt waren, eingesetzt. Die Kalibrierung erfolgte mit einem Na-PAA Standard, deren integrale Molekulargewichtsverteilungskurve durch SEC-Laserlichtstreukopplung bestimmt worden war, nach dem Kalibrierverfahren von M.J.R. Cantow u.a. (J. Polym. Sci., A-1, 5(1967) 1391-1394), allerdings ohne die dort vorgeschlagene Konzentrationskorrektur. Alle Proben wurden mit einer 50 gew.-%igen Natronlauge auf pH 7 eingestellt. Ein Teil der Lösung wurde mit VE-Wasser auf einen Feststoffgehalt von 1,5 mg/mL verdünnt und 12 Stunden lang gerührt. Anschließend wurden die Proben filtriert, und 100 µL wurde durch eine Sartorius Minisart RC 25 (0.2 µm)) eingespritzt.

### Beispiel 1

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 11,0 g einer 15 gew.-%igen wässrigen Ammoniumpersulfat-Lösung und 47,46 g einer 15 gew.-%igen wässrigen Natriumhypophosphit-Lösung innerhalb von 1 Minute zugegeben. Anschließend wurden 1 000 g von einer 80 gew.-%igen wässrigen Lösung einer destillierten Acrylsäure, 86,0 g einer 15 gew.-%igen wässrigen Ammoniumperoxodisulfat-Lösung und eine erste Menge von 130,14 g einer 15 gew.-%igen wässrigen Natriumhypophosphit-Lösung separat und parallel unter Rühren zudosiert. Die Acrylsäure wurde innerhalb von 2 Stunden, Ammoniumperoxodisulfat innerhalb von 2,25 Stunden und Natriumhypophosphit innerhalb von einer Stunde zudosiert. Nach Ende des Zulaufs der ersten Menge von Natriumhypophosphit-Lösung wurde dann eine zweite Menge der 15 gew.-%igen wässrigen Natriumhypophosphit-Lösung stufenweise zugeben. Zuerst 42,66 g innerhalb von 10 Minuten (4,26 g/Minute), dann 18,6 g innerhalb von 5 Minuten (3,74 g/Minute), dann 16 g innerhalb von 5 Minuten (3,20 g/Minute), dann 40 g innerhalb von 15 Minuten (2,66 g/Minute), dann 16 g innerhalb von 10 Minuten (1,60 g/Minute), dann 10,6 g innerhalb von 10 Minuten (1,06 g/Minute) und 2,66 g innerhalb von 5 Minuten (0,52 g/Minute). Nach Ende des Ammoniumperoxodisulfat-Zulaufs wurden 310,86 g einer 50%igen wässrigen Natriumhydroxid-Lösung bei einer Innentemperatur von 100°C zugegeben, wodurch die erhaltene Polyacrylsäure teilneutralisieren wurde. Dann wurde die Polymer-Lösung auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

### Beispiel 2

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 11,0 g einer 15 gew.-%igen wässrigen Natriumpersulfat-Lösung und 47,46 g einer 15 gew.-%igen wässrigen Natriumhypophosphit-Lösung innerhalb von 1 Minute zugegeben. Anschließend wurden 1 000 g einer 80 gew.-%igen wässrigen Lösung einer destillierten Acrylsäure, 86,0 g einer 15 gew.-%igen wässrigen Natriumperoxodisulfat-Lösung und eine erste Menge von 130,14 g einer 15 gew.-%igen wässrigen Natriumhypophosphit-Lösung separat und parallel unter Rühren zudosiert. Die Acrylsäure wurde innerhalb von 2 Stunden, Natriumperoxodisulfat innerhalb von 2,25 Stunden und Natriumhypophosphit innerhalb von 1 Stunde zudosiert. Nach Ende des Zulaufs der ersten Menge von Natriumhypophosphit-Lösung wurde dann eine zweite Menge von einer 15 gew.-%igen wässrigen Natriumhypophosphit-Lösung stufenweise zugegeben. Zuerst 42,66 g innerhalb von 10 Minuten (4,26 g/Minute), dann 18,6 g innerhalb von 5 Minuten (3,74 g/Minute), dann 16 g innerhalb von 5 Minuten (3,20 g/Minute), dann 40 g innerhalb von 15 Minuten (2,66 g/Minute), dann 16 g innerhalb von 10 Minuten (1,60 g/Minute), dann 10,6 g innerhalb von 10 Minuten (1,06 g/Minute) und 2,66 g innerhalb von 5 Minuten (0,52 g/Minute). Nach Ende des Natriumperoxodisulfat-Zulaufs wurden 310,86 g einer 50 gew.-%igen wässrigen Natriumhydroxid-Lösung bei einer Innentemperatur von 100°C zugegeben, wodurch die Polyacrylsäure teilneutralisiert wurde. Dann wurde die Polymer-Lösung auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

### Beispiel 3

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 11,0 g einer 15 gew.-%igen wässrigen Ammoniumpersulfat-Lösung und 47,46 g einer 15 gew.-%igen wässrigen Natriumhypophosphit-Lösung innerhalb von 1 Minute zugegeben. Anschließend wurden 1 000 g von einer 80 gew.-%igen wässrigen Lösung einer destillierten Acrylsäure, 86,0 g einer 15 gew.-%igen wässrigen Ammoniumperoxodisulfat-Lösung und eine erste Menge von 130,14 g einer 15 gew.-%igen wässrigen Natriumhypophosphit-Lösung separat und parallel unter Rühren zudosiert. Die Acrylsäure wurde innerhalb von 5 Stunden, Ammoniumperoxodisulfat innerhalb von 5,25 Stunden und Natriumhypophosphit innerhalb von 2,5 Stunden zudosiert. Nach Ende des Zulaufs der ersten Menge von Natriumhypophosphit wurde dann eine zweite Menge der 15 gew.-%igen wässrigen Natriumhypophosphit-Lösung stufenweise zugeben. Erst 42,66 g innerhalb von 25 Minuten (1,71 g/Minute), dann 18,6 g innerhalb von 12,5 Minuten (1,49 g/Minute), dann 16 g innerhalb von 12,5 Minuten (1,28 g/Minute), dann 40 g innerhalb von 37,5 Minuten (1,07 g/Minute), dann 16 g innerhalb von 25 Minuten (0,64 g/Minute), dann 10,6 g innerhalb von 25 Minuten (0,42 g/Minute) und schließlich 2,66 g innerhalb von 12,5 Minuten (0,21 g/Minute). Nach Ende des Ammoniumperoxodisulfat-Zulaufs wurden 310,86 g einer 50 gew.-%igen wässrigen Natriumhydroxid-Lösung bei einer Innentemperatur von 100°C zugegeben, wodurch die gebildete Polyacrylsäure teilneutralisiert wurde. Dann wurde die Polymer-Lösung auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

### Beispiel 4

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 11,0 g einer 15 gew.-%igen wässrigen Natriumpersulfat-Lösung und 47,46 g einer 15 gew.-%igen wässrigen Natriumhypophosphit-Lösung innerhalb von 1 Minute zugegeben. Anschließend wurden 1 000 g einer 80 gew.-%igen wässrigen Lösung einer destillierten Acrylsäure, 86,0 g einer 15 gew.-%igen wässrigen Natriumperoxodisulfat-Lösung und eine erste Menge von 130,14 g einer 15 gew.-%igen wässrigen Natriumhypophosphit-Lösung separat und parallel unter Rühren zudosiert. Die Acrylsäure wurde innerhalb von 5 Stunden, Natriumperoxodisulfat innerhalb von 5,25 Stunden und Natriumhypophosphit innerhalb von 2,5 Stunden zudosiert. Nach Ende des Zulaufs der ersten Menge von Natriumhypophosphit-Lösung wurde eine zweite Menge der 15%igen wässriger Natriumhypophosphit-Lösung stufenweise zugeben. Zuerst 42,66 g innerhalb von 25 Minuten (1,71 g/Minute), dann 18,6 g innerhalb von 12,5 Minuten (1,49 g/Minute), dann 16 g innerhalb von 12,5 Minuten (1,28 g/Minute), dann 40 g innerhalb von 37,5 Minuten (1,07 g/Minute), dann 16 g innerhalb von 25 Minuten (0,64 g/Minute), dann 10,6 g innerhalb von 25 Minuten (0,42 g/Minute) und 2,66 g innerhalb von 12,5 Minuten (0,21 g/Minute). Nach Ende des Ammoniumperoxodisulfat-Zulaufs wurden 310,86 g einer 50 gew.-%igen wässrigen Natriumhydroxid-Lösung bei einer Innentemperatur von 100°C zugegeben, wodurch die gebildete Polyacrylsäure teilneutralisiert wurde. Es wurden der pH-Wert, die Molekulargewichte Mₙ und M_{w}, der Feststoffgehalt und der Acrylsäure-Restgehalt bestimmt und die Lösung visuell beurteilt.

### Beispiel 5 (Vergleichsbeispiel)

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 11,0 g einer 15 gew.-%igen wässrigen Ammoniumpersulfat-Lösung und 47,46 g einer 15 gew.-%igen wässrigen Natriumhypophosphit-Lösung innerhalb von 1 Minute zugegeben. Anschließend wurden 1 000 g einer 80 gew.-%igen wässrigen Lösung einer destillierten Acrylsäure, 86,0 g einer 15 gew.-%igen wässrigen Ammoniumperoxodisulfat-Lösung und 276,8 g einer 15 gew.-%igen wässrigen Natriumhypophosphit-Lösung separat und parallel unter Rühren zudosiert. Die Acrylsäure wurde innerhalb von 2 Stunden, Ammoniumperoxodisulfat innerhalb von 2,25 Stunden und Natriumhypophosphit innerhalb von 2 Stunde zudosiert. Nach Zulaufende von Ammoniumperoxodisulfat wurden 310,86 g einer 50 gew.-%igen wässrigen Natriumhydroxid-Lösung bei einer Innentemperatur von 100°C zugegeben und die gebildete Polyacrylsäure dadurch teilneutralisiert. Dann wurde die Polymer-Lösung auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

### Beispiel 6

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 23,6 g einer 7 gew.-%igen wässrigen Natriumpersulfat-Lösung und 20,0 g einer 59 gew.-%igen wässrigen Natriumhypophosphit-Lösung innerhalb von 1 Minute zugegeben. Anschließend wurden 930,0 g einer 86 gew.-%igen wässrigen Lösung von destillierter Acrylsäure, 184,3 g einer 7 gew.-%igen wässrigen Natriumperoxodisulfat-Lösung und eine erste Menge von 55,0 g einer 59 gew.-%igen wässrigen Natriumhypophosphit-Lösung separat und parallel unter Rühren zudosiert. Die Acrylsäure wurde innerhalb von 5 Stunden, Natriumperoxodisulfat innerhalb von 5,25 Stunden und Natriumhypophosphit innerhalb von 2,5 Stunde zudosiert. Nach Ende des Zulaufs der ersten Menge von Natriumhypophosphit-Lösung wurde dann eine zweite Menge einer 59 gew.-%igen wässriger Natriumhypophosphit-Lösung stufenweise zugeben. Zuerst 18,0 g innerhalb von 25 Minuten (0,72 g/Minute), dann 8,0 g innerhalb von 14 Minuten (0,57 g/Minute), dann 6,0 g innerhalb von 12 Minuten (0,50 g/Minute), dann 17 g innerhalb von 37 Minuten (0,46 g/Minute), dann 7 g innerhalb von 25 Minuten (0,28 g/Minute), dann 4,0 g innerhalb von 25 Minuten (0,16 g/Minute) und 1,0 g innerhalb von 12 Minuten (0,08 g/Minute). Nach Ende des Natriumperoxodisulfat-Zulaufs wurde die Polymer-Lösung auf Raumtemperatur abgekühlt. Anschließend wurden 310,86 g einer 50 gew.-%igen wässrigen Natriumhydroxid-Lösung zugegeben, wodurch ein Neutralisationsgrad 35% eingestellt wurde. Es wurden der pH-Wert, die Molekulargewichte Mₙ und M_{w}, der Feststoffgehalt und der Acrylsäure-Restgehalt bestimmt und die Lösung visuell beurteilt.

### Beispiel 7

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 23,6 g einer 7 gew.-%igen wässrigen Natriumpersulfat-Lösung und 8,0 g einer 59 gew.-%igen wässrigen Natriumhypophosphit-Lösung innerhalb von 1 Minute zugegeben. Anschließend wurden 930,0 g einer 86 gew.-%igen wässrigen Lösung von destillierter Acrylsäure, 184,3 g einer 7 gew.-%igen wässrigen Natriumperoxodisulfat-Lösung und eine erste Menge von 22,0 g einer 59 gew.-%igen wässrigen Natriumhypophosphit-Lösung separat und parallel unter Rühren zudosiert. Die Acrylsäure wurde innerhalb von 5 Stunden, Natriumperoxodisulfat innerhalb von 5,25 Stunden und Natriumhypophosphit innerhalb von 2,5 Stunde zudosiert. Nach Ende des Zulaufs der ersten Menge von Natriumhypophosphit-Lösung wurde dann eine zweite Menge einer 59 gew.-%igen wässriger Natriumhypophosphit-Lösung stufenweise zugegeben. Zuerst 7,0 g innerhalb von 25 Minuten (0,28 g/Minute), dann 3,0 g innerhalb von 14 Minuten (0,21 g/Minute), dann 2,0 g innerhalb von 12 Minuten (0,17 g/Minute), dann 6 g innerhalb von 37 Minuten (0,16 g/Minute), dann 3 g innerhalb von 25 Minuten (0,12 g/Minute), dann 2,0 g innerhalb von 25 Minuten (0,08 g/Minute) und 1,0 g innerhalb von 12 Minuten (0,08 g/Minute). Nach Ende des Natriumperoxodisulfat-Zulaufs wurde die Polymer-Lösung auf Raumtemperatur abgekühlt. Anschließend wurden 310,86 g einer 50 gew.-%igen wässrigen Natriumhydroxid-Lösung zugegeben, wodurch ein Neutralisationsgrad von 35% eingestellt wurde. Es wurden der pH-Wert, die Molekulargewichte Mₙ und M_{w}, der Feststoffgehalt und der Acrylsäure-Restgehalt bestimmt und die Lösung visuell beurteilt.

### Beispiel 8

In einem Reaktor wurden 502,0 g VE-Wasser vorgelegt. Unter Stickstoff-Atmosphäre wurde auf 100°C Innentemperatur erhitzt. Bei dieser Temperatur wurden gleichzeitig 23,6 g einer 7 gew.-%igen wässrigen Natriumpersulfat-Lösung und 12,1 g einer 59 gew.-%igen wässrigen Natriumhypophosphit-Lösung innerhalb von 1 Minute zugegeben. Anschließend wurden 930,0 g einer 86 gew.-%igen wässrigen Lösung von destillierter Acrylsäure, 184,3 g einer 7 gew.-%igen wässrigen Natriumperoxodisulfat-Lösung und eine erste Menge von 33,0 g einer 59 gew.-%igen wässrigen Natriumhypophosphit-Lösung separat und parallel unter Rühren zudosiert. Die Acrylsäure wurde innerhalb von 5 Stunden, Natriumperoxodisulfat innerhalb von 5,25 Stunden und Natriumhypophosphit innerhalb von 2,5 Stunde zudosiert. Nach Ende des Zulaufs der ersten Menge von Natriumhypophosphit-Lösung wurde dann eine zweite Menge einer 59 gew.-%igen wässriger Natriumhypophosphit-Lösung stufenweise zugeben. Zuerst 11,0 g innerhalb von 25 Minuten (0,44 g/Minute), dann 5,0 g innerhalb von 14 Minuten (0,36 g/Minute), dann 4,0 g innerhalb von 12 Minuten (0,33 g/Minute), dann 10 g innerhalb von 37 Minuten (0,27 g/Minute), dann 4,0 g innerhalb von 25 Minuten (0,16 g/Minute), dann 3,0 g innerhalb von 25 Minuten (0,12 g/Minute) und 1,0 g innerhalb von 12 Minuten (0,08 g/Minute). Nach Ende des Natriumperoxodisulfat-Zulaufs wurde die Polymer-Lösung auf Raumtemperatur abgekühlt. Anschließend wurden 310,86 g einer 50 gew.-%igen wässrigen Natriumhydroxid-Lösung zugegeben, wodurch ein Neutralisationsgrad 35% eingestellt wurde. Es wurden der pH-Wert, die Molekulargewichte Mₙ und M_{w}, der Feststoffgehalt und der Acrylsäure-Restgehalt bestimmt und die Lösung visuell beurteilt.

### Beispiel 9

In einem Reaktor wurden 502,0 g VE-Wasser vorgelegt. Unter Stickstoff Atmosphäre wurde auf 100°C Innentemperatur erhitzt. Bei dieser Temperatur wurden gleichzeitig 11,0 g einer 15 gew.-%igen wässrigen Natriumpersulfat-Lösung und 47,5 g einer 15 gew.-%igen wässrigen Natriumhypophosphit-Lösung innerhalb von 1 Minute zugegeben. Anschließend wurden 1000 g einer 80 gew.-%igen wässrigen Lösung von destillierter Acrylsäure, 86,0 g einer 15 gew.-%igen wässrigen Natriumperoxodisulfat-Lösung und eine erste Menge von 130,0 g einer 15 gew.-%igen wässrigen Natriumhypophosphit-Lösung separat und parallel unter Rühren zudosiert. Die Acrylsäure wurde innerhalb von 2 Stunden, Natriumperoxodisulfat innerhalb von 2,25 Stunden und Natriumhypophosphit innerhalb von 1 Stunde zudosiert. Nach Ende des Zulaufs der ersten Menge von Natriumhypophosphit-Lösung wurde dann eine zweite Menge einer 15 gew.-%igen wässriger Natriumhypophosphit-Lösung stufenweise zugeben. Zuerst 43,0 g innerhalb von 25 Minuten (1,72 g/Minute), dann 19,0 g innerhalb von 13 Minuten (1,46 g/Minute), dann 16,0 g innerhalb von 13 Minuten (1,23 g/Minute), dann 40 g innerhalb von 37 Minuten (1,08 g/Minute), dann 16,0 g innerhalb von 25 Minuten (0,64 g/Minute), dann 11,0 g innerhalb von 25 Minuten (0,44 g/Minute) und 2,0 g innerhalb von 5 Minuten (0,4 g/Minute). Nach Ende des Natriumperoxodisulfat-Zulaufs wurde die Polymer-Lösung auf Raumtemperatur abgekühlt. Anschließend wurden 310,86 g einer 50 gew.-%igen wässrigen Natriumhydroxid-Lösung zugegeben, wodurch ein Neutralisationsgrad 35% eingestellt wurde. Es wurden der pH-Wert, die Molekulargewichte Mₙ und M_{w}, der Feststoffgehalt und der Acrylsäure-Restgehalt bestimmt und die Lösung visuell beurteilt.

### Beispiel 10 (Vergleichsbeispiel)

In einem Reaktor wurden 540,0 g VE-Wasser zusammen mit 9,0 g einer 0,15 %igen Eisen(II)sulfat-Heptahydrat vorgelegt. Unter Stickstoff-Atmosphäre wurde auf 90°C Innentemperatur erhitzt. Bei dieser Temperatur wurden gleichzeitig 77,2 g einer 35 gew.-%igen wässrigen Natriumhypophosphit-Lösung innerhalb von 1 Minute zugegeben. Anschließend wurden 900 g von einer destillierter Acrylsäure, 59,2 g einer 15,2 gew.-%igen wässrigen Natriumperoxodisulfat-Lösung und 77,2 g einer 20,6 gew.-%igen wässrigen Natriumhypophosphit-Lösung separat und parallel unter Rühren zudosiert. Die Acrylsäure wurde innerhalb von 2 Stunden, Natriumperoxodisulfat innerhalb von 2 Stunden und Natriumhypophosphit innerhalb von 1,6 Stunde zudosiert. Nach Ende des Natriumperoxodisulfat-Zulaufs wurde die Polymer-Lösung anschließend 30 Minuten bei 90°C gerührt, und dann auf Raumtemperatur abgekühlt. Es wurden der pH-Wert, die Molekulargewichte Mₙ und M_{w}, der Feststoffgehalt und der Acrylsäure-Restgehalt bestimmt und die Lösung visuell beurteilt.

Die analytischen Daten der hergestellten Acrylsäure-Polymere sind in der nachstehenden Tabelle 1 zusammengefasst.

**Tabelle 1**

| Beispiel | Feststoffgehalt [%]^{a} | K Wert^{b} | pH (tq) | Mw^{c} | PDI^{c} | Oligomer enanteil <1000 g/mol | %-P internal^{d} | %-P External^{d} | %-P inorg^{d} |
|---|---|---|---|---|---|---|---|---|---|
| 1 | 42.5 | 24.8 | 4.3 | 5080 | 2.1 | 4.7 | 79.6 | 11.3 | 9,2 |
| 2 | 41.5 | 24.9 | 4.3 | 4990 | 2.1 | 4.9 | 81.6 | 6.9 | 10,5 |
| 3 | 42.1 | 24.1 | 4.3 | 4820 | 2.0 | 5.2 | 85.8 | 6.4 | 7,8 |
| 4 | 43.6 | 23.2 | 4.5 | 4960 | 2.1 | 5.4 | 86.7 | 5.6 | 7,7 |
| 5 | 41.6 | 26.0 | 4.3 | 5490 | 2.1 | 4.4 | 65.1 | 13.0 | 20,5 |
| 6 | 46,4 | 16,6 | 4,2 | 3040 | 1,6 | 6,4 | 86,3 | 8,1 | 5,6 |
| 7 | 45,8 | 30,3 | 4,2 | 8020 | 2,4 | 2,5 | 80,8 | 11,7 | 7,5 |
| 8 | 46,1 | 24,0 | 4,3 | 4990 | 1,9 | 3,4 | 83,9 | 10,2 | 5,9 |
| 9 | 43,5 | 23,7 | 4,3 | 5080 | 2,0 | 3,8 | 86,7 | 5,6 | 7,7 |
| 10 | 58,6 | 23,5 | 1,8 | 4610 | 1,8 | 3,7 | 75,9 | 18,8 | 5,3 |

| | | | | | | | | | |
|---|---|---|---|---|---|---|---|---|---|
| ^{a)} ISO 3251, (0.25 g, 150°C, 2h) ^{b)} bestimmt durch Fikentscher Methode mit einer 1%iger Lösung in VE-Wasser ^{c)} bestimmt durch Gel Permeation Chromatographie d) bestimmt mit ³¹P{¹H} and ³¹P NMR | | | | | | | | | |

### Anwendungstests

### Verwendung der Acrylsäure-Polymere als Dispergiermittel

Die hergestellten Polyacrylsäurelösungen wurden auf ihre Eignung als Dispergiermittel zur Herstellung von Slurries getestet. Dazu wurde jeweils eine Vermahlung von Calciumcarbonat mit einem Dispermaten durchgeführt. Hierfür wurden jeweils 300 g Calciumcarbonat (Hydrocarb OG von Omya) und 600 g Keramikperlen gemischt und in einem 500 ml Doppelwandgefäß, das mit Leitungswasser gefüllt ist, vorgelegt. Anschließend wurden 100 g einer 3 gew.-%ige wässrige Lösung der zu testenden Polyacrylsäure, die zuvor auf pH 5,0 eingestellt wurde, zugegeben. Die Mahlung erfolgte mittels eines Mahlaggregats vom Typ Dispermat AE-C (Hersteller VMA-Getzmann) mit einem Kreuzbalkenrührer bei einer Umdrehungszahl von 1200 U/min. Sobald 70% des Pigments eine Teilchengröße (TGV) von kleiner 1 µm aufwiesen, wurde die Mahlung beendet (ca. 70 min, Partikelmessgerät LS 13320, Fa. Beckman Coulter). Nach der Mahlung wurde der Slurry zur Abtrennung der Keramikperlen über ein 780 µm-Filter mit Hilfe einer Porzellannutsche filtriert und der Feststoffgehalt der Slurry auf 77% eingestellt. Die Viskosität des Slurry wurde sofort, nach 24 h und nach 168 h mit Hilfe eines Brookfield Viskosimeters DV II bestimmt (mit Spindel Nr. 3).

Die Ergebnisse der Dispergierversuche sind in Tabelle 2 zusammengestellt.

**Tabelle 2**

| Beispiel | Partikelgrößenverteilung | | Dynamische Viskosität [mPas] bei 100 rpm | | | | FG Slurry [%] |
|---|---|---|---|---|---|---|---|
| | <2 µm | <1 µm | nach 1 h | nach 24 h | nach 96 h | nach 168 h | |
| 1 | 99,1 | 74,0 | 527 | 930 | 1750 | 2450 | 77,0 |
| 2 | 98,9 | 72,9 | 620 | 1870 | 2220 | 3341 | 77,0 |
| 3 | 97,6 | 72,6 | 687 | 1710 | 2747 | 3419 | 77,0 |
| 4 | 97,2 | 71,1 | 619 | 1620 | 2357 | 3289 | 77,0 |
| 5 | 98,9 | 72,5 | 820 | 2540 | 3960 | 5270 | 77,0 |
| 6 | 99,5 | 74,0 | 2034 | 4055 | >6000 | >6000 | 77,0 |
| 7 | 99,0 | 74,0 | 835 | 1902 | 3209 | 4050 | 77,0 |
| 8 | 99,1 | 74,6 | 524 | 949 | 1974 | 2567 | 77,0 |
| 9 | 98,9 | 75,0 | 628 | 1448 | 2280 | 2890 | 77,0 |
| 10 | 98,9 | 72,4 | 1284 | 3011 | 4380 | 5645 | 77,0 |

## Patentansprüche

1. Verfahren zur Herstellung von wässrigen Lösungen von Acrylsäure-Polymeren durch Polymerisation von Acrylsäure in Zulauf-Fahrweise mit einem RadikalStarter in Gegenwart von Hypophosphit in Wasser als Lösungsmittel, bei dem
(i) Wasser und gegebenenfalls ein oder mehrere ethylenisch ungesättigte Comonomere vorgelegt,
(ii) Acrylsäure in saurer, nicht neutralisierter Form, gegebenenfalls ein oder mehrere ethylenisch ungesättigte Comonomere, wässrige Radikalstarter-Lösung und wässrige Hypophosphit-Lösung kontinuierlich zugegeben werden,
(iii) nach Beendigung des Acrylsäure-Zulaufs zu der wässrigen Lösung eine Base zugegeben wird,
wobei der Comonomer-Gehalt 30 Gew.-%, bezogen auf den Gesamtmonomer-Gehalt, nicht übersteigt, **dadurch gekennzeichnet, dass**
die wässrige Hypophosphit-Lösung während einer Gesamtzulaufzeit aus drei aufeinander folgenden Zulaufzeitspannen Δt_{I}, Δt_{II} und Δt_{III} zugegeben wird, wobei die mittlere Zulaufgeschwindigkeit in der zweiten Zulaufzeitspanne Δt_{II} größer ist als die mittleren Zulaufgeschwindkeiten in der ersten und in der dritten Zulaufzeitspanne Δt_{I}, Δt_{III}.

2. Verfahren nach Anspruch 1, **dadurch gekennzeichnet, dass** die erste Zulaufzeitspanne Δt_{I} 30 bis 70% der Gesamtzulaufzeit beträgt.

3. Verfahren nach Anspruch 1 oder 2, **dadurch gekennzeichnet, dass** die zweite Zulaufzeitspanne 5 bis 25% der Gesamtzulaufzeit beträgt.

4. Verfahren nach einem der Ansprüche 1 bis 3, **dadurch gekennzeichnet**, das die dritte Zulaufzeitspanne zwei Teil-Zulaufzeitspannen Δt_{IIIa} und Δt_{IIIb} umfasst, wobei während der ersten Teil-Zulaufzeitspanne Δt_{IIIa} die mittlere Zulaufgeschwindigkeit größer oder gleich groß und während der zweiten Teil-Zulaufzeitspanne Δt_{IIIb} die mittlere Zulaufgeschwindigkeit kleiner als die mittlere Zulaufgeschwindigkeit während der ersten Zulaufzeitspanne ist.

5. Verfahren nach einem der Ansprüche 1 bis 4, **dadurch gekennzeichnet, dass** die Gesamtzulaufzeit 80 bis 500 min beträgt.

6. Verfahren nach einem der Ansprüche 1 bis 5, **dadurch gekennzeichnet, dass** bis zu 30 Gew.-% Comonomere, ausgewählt aus der Gruppe bestehend aus Methacrylsäure, Maleinsäure(anhydrid), Vinylsulfonsäure, Allylsulfonsäure und 2-Acrylamido-2-methylpropansulfonsäure mit einpolymerisiert werden.

7. Verfahren nach einem der Ansprüche 1 bis 6, **dadurch gekennzeichnet, dass** die Polymerisation unter Inertgasatmosphäre durchgeführt wird.

8. Wässrige Lösungen von Acrylsäure-Polymeren, herstellbar nach dem Verfahren gemäß einem der Ansprüche 1 bis 7.

9. Wässrige Lösung nach Anspruch 7 oder 8, mit einem Phosphor-Gesamtgehalt von organisch und gegebenenfalls anorganisch gebundenem Phosphor, wobei
(a) ein erster Teil des Phosphors in Form von in der Polymerkette gebundenen Phosphinat-Gruppen vorliegt,
(b) ein zweiter Teil des Phosphors in Form von am Polymerkettenende gebundenen Phosphinat und/oder Phosphonat-Gruppen vorliegt,
(c) gegebenenfalls ein dritter Teil des Phosphors in Form von gelösten anorganische Phosphorsalze vorliegt,
**dadurch gekennzeichnet, dass** mindestens 76% des Phosphor-Gesamtgehalts in Form von in der Polymerkette der Acrylsäure-Polymere gebundenen Phosphinat-Gruppen vorliegt.

10. Wässrige Lösung nach Anspruch 7 bis 9, **dadurch gekennzeichnet, dass** höchstens 15% des Phosphors in Form von am Polymerkettenende gebundenen Phosphinat- und/oder Phosphonat-Gruppen vorliegt.

11. Wässrige Lösung nach einem der Ansprüche 7 bis 10, **dadurch gekennzeichnet, dass** das gewichtsmittlere Molekulargewicht der Acrylsäure-Polymere 3500 bis 12 000 g/mol beträgt.

12. Wässrige Lösung nach einem der Ansprüche 7 bis 11, **dadurch gekennzeichnet, dass** der Polydispersitätsindex der Acrylsäure-Polymere M_{w} / Mₙ ≤ 2,5 ist.

13. Die aus den wässrigen Lösungen gemäß einem der Ansprüche 1 bis 12 erhältlichen Acrylsäure-Polymere.

14. Verwendung der wässrigen Lösungen nach einem der Ansprüche 7 bis 12 und der Acrylsäure-Polymere nach Anspruch 13 als Dispergiermittel in wässrigen Feststoff-Dispersionen.

15. Verwendung nach Anspruch 14 in wässrigen Dispersionen von CaCO₃, Kaolin, Talkum, TiO₂, ZnO, ZrO₂, Al₂O₃ oder MgO.

## Claims

1. A process for preparing aqueous solutions of acrylic acid polymers by polymerization of acrylic acid in feed operation with a free-radical initiator in the presence of hypophosphite in water as solvent, which process comprises
(i)initially charging water and optionally one or more ethylenically unsaturated comonomers,
(ii) continuously adding acrylic acid in acidic, unneutralized form, optionally one or more ethylenically unsaturated comonomers, aqueous free-radical initiator solution and aqueous hypophosphite solution,
(iii)adding a base to the aqueous solution on completion of the acrylic acid feed,
wherein the comonomer content does not exceed 30% by weight, based on the total monomer content, wherein
the aqueous hypophosphite solution is added during a total feed time made up of three consecutive feed time spans Δt_{I}, Δt_{II} and Δt_{III}, wherein the average feed rate in the second feed time span Δt_{II} is greater than the average feed rates in the first and third feed time spans Δt_{I} and Δt_{II}.

2. The process according to Claim 1 wherein the first feed time span Δt_{I} amounts to 30 to 70% of the total feed time.

3. The process according to Claim 1 or 2 wherein the second feed time span amounts to 5 to 25% of the total feed time.

4. The process according to any one of Claims 1 to 3 wherein the third feed time span comprises two subsidiary feed time spans Δt_{IIIa} and Δt_{IIIb}, wherein the average feed rate during the first subsidiary feed time span Δt_{IIIa} is not less than the average feed rate during the first feed time span and the average feed rate during the second subsidiary feed time span Δt_{IIIb} is less than the average feed rate during the first feed time span.

5. The process according to any one of Claims 1 to 4 wherein the total feed time is in the range from 80 to 500 min.

6. The process according to any one of Claims 1 to 5 wherein up to 30% by weight of comonomers selected from the group consisting of methacrylic acid, maleic acid, maleic anhydride, vinylsulfonic acid, allylsulfonic acid and 2-acrylamido-2-methylpropanesulfonic acid is co-interpolymerized.

7. The process according to any one of Claims 1 to 6 wherein the polymerization is carried out under inert gas atmosphere.

8. An aqueous solution of an acrylic acid polymer obtainable by the process according to any one of Claims 1 to 7.

9. The aqueous solution according to Claim 7 or 8 having a total phosphorus content of organically and possibly inorganically bound phosphorus, wherein
(a)a first portion of the phosphorus is present in the form of phosphinate groups bound within the polymer chain,
(b)a second portion of the phosphorus is present in the form of phosphinate and/or phosphonate groups bound at the polymer chain end,
(c)possibly a third portion of the phosphorus is present in the form of dissolved inorganic salts of phosphorus,
wherein at least 76% of the total phosphorus content is present in the form of phosphinate groups bound within the polymer chain of the acrylic acid polymer.

10. The aqueous solution according to Claim 7 or 8 or 9 wherein at most 15% of the phosphorus is present in the form of phosphinate and/or phosphonate groups bound at the polymer chain end.

11. The aqueous solution according to any one of Claims 7 to 10 wherein the weight average molecular weight of the acrylic acid polymer is in the range from 3500 to 12 000 g/mol.

12. The aqueous solution according to any one of Claims 7 to 11 wherein the M_{w}/Mₙ polydispersity index of the acrylic acid polymer is ≤ 2.5.

13. The acrylic acid polymer obtainable from the aqueous solution according to any one of claims 1 to 12.

14. The use of the aqueous solution according to any one of Claims 7 to 12 and of the acrylic acid polymer according to claim 13 as dispersants in aqueous dispersions of solid material.

15. The use according to Claim 14 in aqueous dispersions of CaCO₃, kaolin, talcum, TiO₂, ZnO, ZrO₂, Al₂O₃ or MgO.

## Revendications

1. Procédé de préparation de solutions aqueuses de polymères d'acide acrylique par polymérisation d'acide acrylique dans un mode opératoire par alimentation avec un initiateur radicalaire en présence d'hypophosphite dans de l'eau comme solvant, dans lequel
(i) on dispose au préalable de l'eau et éventuellement un ou plusieurs comonomères éthyléniquement insaturés
(ii) on ajoute en continu de l'acide acrylique sous forme acide, non neutralisée, le cas échéant un ou plusieurs comonomères éthyléniquement insaturés, une solution aqueuse d'initiateurs radicalaires et une solution aqueuse d'hypophosphite,
(iii) après la fin de l'alimentation d'acide acrylique, on ajoute une base à la solution aqueuse
la teneur en comonomères ne dépassant pas 30% en poids par rapport à la teneur totale en monomères, **caractérisé en ce que** la solution aqueuse d'hypophosphite est ajoutée pendant un temps d'alimentation total constitué par trois laps de temps d'alimentation consécutifs Δt_{I}, Δt_{II} et Δt_{III}, la vitesse d'alimentation moyenne dans le deuxième laps de temps d'alimentation Δt_{II} étant supérieure aux vitesses d'alimentation moyennes dans le premier et le troisième laps de temps d'alimentation Δt_{I}, Δt_{III}.

2. Procédé selon la revendication 1, **caractérisé en ce que** le premier laps de temps d'alimentation Δt_{I} représente 30 à 70% du laps du temps d'alimentation total.

3. Procédé selon la revendication 1 ou 2, **caractérisé en ce que** le deuxième laps de temps d'alimentation représente 5 à 25% du laps de temps d'alimentation total.

4. Procédé selon l'une quelconque des revendications 1 à 3, **caractérisé en ce que** le troisième laps de temps d'alimentation comprend deux laps de temps d'alimentation partiels Δt_{IIIa} et Δt_{IIIb}, la vitesse d'alimentation moyenne pendant le premier laps de temps d'alimentation partiel Δt_{IIIa} étant supérieure ou égale à la vitesse d'alimentation moyenne pendant le premier laps de temps d'alimentation et la vitesse d'alimentation moyenne pendant le deuxième laps de temps d'alimentation partiel Δt_{IIIb} étant inférieure à la vitesse d'alimentation moyenne pendant le premier laps de temps d'alimentation.

5. Procédé selon l'une quelconque des revendications 1 à 4, **caractérisé en ce que** le laps de temps d'alimentation total dure 80 à 500 min.

6. Procédé selon l'une quelconque des revendications 1 à 5, **caractérisé en ce qu'**on copolymérise jusqu'à 30% en poids de comonomères choisis dans le groupe constitué par l'acide méthacrylique, (l'anhydride de) l'acide maléique, l'acide vinylsulfonique, l'acide allylsulfonique et l'acide 2-acrylamido-2-méthylpropanesulfonique.

7. Procédé selon l'une quelconque des revendications 1 à 6, **caractérisé en ce que** la polymérisation est réalisée sous atmosphère de gaz inerte.

8. Solutions aqueuses de polymères d'acide acrylique, pouvant être préparées selon le procédé selon l'une quelconque des revendications 1 à 7.

9. Solution aqueuse selon la revendication 7 ou 8, présentant une teneur totale en phosphore lié de manière organique et le cas échéant de manière inorganique,
(a) une première partie du phosphore se trouvant sous forme de groupes phosphinate liés dans la chaîne polymère,
(b) une deuxième partie du phosphore se trouvant sous forme de groupes phosphinate et/ou phosphonate liés aux extrémités de la chaîne polymère,
(c) le cas échéant une troisième partie du phosphore se trouvant sous forme de sels de phosphore inorganiques dissous,
**caractérisée en ce qu'**au moins 76% de la teneur totale en phosphore se trouvent sous forme de groupes phosphinate liés dans la chaîne polymère des polymères d'acide acrylique.

10. Solution aqueuse selon la revendication 7 à 9, **caractérisée en ce qu'**au plus 15% du phosphore se trouvent sous forme de groupes phosphinate et/ou phosphonate liés aux extrémités de la chaîne polymère.

11. Solution aqueuse selon l'une quelconque des revendications 7 à 10, **caractérisée en ce que** le poids moléculaire pondéral moyen des polymères d'acide acrylique est de 3500 à 12 000 g/mole.

12. Solution aqueuse selon l'une quelconque des revendications 7 à 11, **caractérisée en ce que** l'indice de polydispersité des polymères d'acide acrylique M_{w}/Mₙ ≤ 2, 5.

13. Polymères d'acide acrylique pouvant être obtenus à partir des solutions aqueuses selon l'une quelconque des revendications 1 à 12.

14. Utilisation des solutions aqueuses selon l'une quelconque des revendications 7 à 12 et des polymères d'acide acrylique selon la revendication 13 comme dispersant dans des dispersions aqueuses de solides.

15. Utilisation selon la revendication 14 dans des dispersions aqueuses de CaCO₃, kaolin, talc, TiO₂, ZnO, ZrO₂, Al₂O₃ ou MgO.
